(19) Europäisches Patentamt / European Patent Office / Office européen des brevets

(11) **EP 4 442 645 A1**

(12) **EUROPEAN PATENT APPLICATION**
published in accordance with Art. 153(4) EPC

(43) Date of publication:
**09.10.2024 Bulletin 2024/41**

(21) Application number: **22898621.2**

(22) Date of filing: **24.11.2022**

(51) International Patent Classification (IPC):
*C01G 25/02* (2006.01)    *C04B 35/486* (2006.01)

(52) Cooperative Patent Classification (CPC):
**C01G 25/00; C01G 25/02; C04B 35/486;
C04B 35/488**

(86) International application number:
**PCT/JP2022/043393**

(87) International publication number:
**WO 2023/095839 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2021 JP 2021192672**

(71) Applicant: **Tosoh Corporation
Yamaguchi 746-8501 (JP)**

(72) Inventors:
• **MATSUI, Koji**
  **Shunan-shi, Yamaguchi 746-8501 (JP)**
• **IMAI, Kenji**
  **Shunan-shi, Yamaguchi 746-8501 (JP)**
• **HOSOI, Kohei**
  **Shunan-shi, Yamaguchi 746-8501 (JP)**

(74) Representative: **Müller-Boré & Partner
Patentanwälte PartG mbB
Friedenheimer Brücke 21
80639 München (DE)**

(54) **POWDER AND PRODUCTION METHOD THEREFOR**

(57)    A zirconia powder comprising 2% by mole or more and 8% by mole or less of a stabilizing element and 50 ppm or less of titanium (Ti) and having an activation energy of 225 kJ/mol or more and 300 kJ/mol or less, which provides at least one of a zirconia powder capable of producing a sintered body with high translucency even by pressureless sintering and suitable for industrial production, a method for producing the zirconia powder, a method for producing a calcined body using the zirconia powder, and a method for producing a sintered body using the zirconia powder. Such a powder is preferably produced by a method comprising the steps of: adjusting a pH of a raw material solution containing a zirconium source and a stabilizing element source to 3.5 or more and 5.5 or less; heating the raw material solution to produce a zirconia sol solution; mixing the zirconia solution and an alkaline solution to produce a coprecipitate; and heat-treating the coprecipitate.

EP 4 442 645 A1

**Description**

TECHNICAL FIELD

The present disclosure relates to a powder containing zirconia as a matrix, a method for producing the powder, and a calcined body and a sintered body using the powder.

BACKGROUND ART

Sintered bodies of zirconia (zirconium oxide; $ZrO_2$) are used in a wide range of applications, such as grinding applications, optical applications, decorative applications, and dental applications. Due to its transparency (so-called translucency) in addition to mechanical characteristics, zirconia has been widely studied for application to dental applications and decorative applications. Furthermore, production methods and raw material powders suitable for these applications have been studied.

For example, it is disclosed that a sintered body with a high total light transmittance can be produced from a commercially available zirconia powder by sintering using a hot isostatic pressing treatment (HIP treatment) (Patent Document 1). On the other hand, it is disclosed that a sintered body with a high total light transmittance can be produced even by pressureless sintering using a powder with a sintering shrinkage rate controlled so that the relative density in pressureless sintering ranges from 70% to 90% (Patent Document 2). It is also disclosed that a sintered body with a relatively high light transmittance can be produced by pressureless sintering using nano-zirconia particles with an primary particle size of less than 30 nm (Patent Document 3).

PRIOR ART DOCUMENTS

PATENT DOCUMENTS

Patent Document 1: International Publication No. WO 2008/013099
Patent Document 2: JP-A-2010-150064
Patent Document 3: JP-A-2016-060687

DISCLOSURE OF INVENTION

TECHNICAL PROBLEM

In Patent Document 1, since the HIP treatment for imparting translucency is required, the production costs tend to be high as a method for producing a sintered body with high translucency, although inexpensive powder can be used. Furthermore, the powder in Patent Document 2 can provide a sintered body with high translucency by pressureless sintering, but precise control of production conditions is required to industrially stably produce such a powder. The nano-zirconia in Patent Document 3 is not suitable from the perspective of industrial production due to high production costs using a special production facility called supercritical drying.

An object of the present disclosure is to provide at least one of a zirconia powder capable of producing a sintered body with high translucency even by pressureless sintering and suitable for industrial production, a method for producing the zirconia powder, a method for producing a calcined body using the zirconia powder, and a method for producing a sintered body using the zirconia powder.

SOLUTION TO PROBLEM

In the present disclosure, an industrial zirconia powder suitable as a raw material powder for a translucent zirconia sintered body and a method for producing the zirconia powder have been studied. As a result, focusing on the state of a powder, in particular, the composition and the energy state, the present inventors have found a powder for producing a sintered body with higher translucency even by pressureless sintering. At the same time, it has been found that such a powder can be produced by improving part of a production process without requiring special production facilities or precise control of production conditions.

Accordingly, the present invention is as described in the claims, and the gist of the present disclosure is as follows:

[1] A zirconia powder comprising 2% by mole or more and 8% by mole or less of a stabilizing element and 50 ppm or less of titanium (Ti) and having an activation energy of 225 kJ/mol or more and 300 kJ/mol or less.

[2] The powder according to [1], wherein the stabilizing element is one or more selected from the group consisting of yttrium, calcium and magnesium.

[3] The powder according to [1] or [2], comprising chlorine.

[4] The powder according to [3], wherein a chlorine content is 100 ppm or more and 500 ppm or less.

[5] The powder according to any one of [1] to [4], wherein a BET specific surface area is 6 $m^2$/g or more and 15 $m^2$/g or less.

[6] The powder according to any one of [1] to [5], wherein a primary particle size is 80 nm or more and 150 nm or less.

[7] The powder according to any one of [1] to [6], comprising an actinoid element.

[8] A method for producing the zirconia powder according to any one of [1] to [7], comprising the steps of: adjusting a pH of a raw material solution containing a zirconium source and a stabilizing element source to 3.5 or more and 5.5 or less; heating the raw material solution to produce a zirconia sol solution; mixing the zirconia solution and an alkaline solution to produce a coprecipitate; and heat-treating the coprecipitate.

[9] The production method according to [8], wherein the raw material solution contains ammonium chloride.

[10] A method for producing a calcined body using the powder according to any one of [1] to [7].

[11] A method for producing a sintered body using the powder according to any one of [1] to [7].

ADVANTAGEOUS EFFECTS OF INVENTION

The present disclosure can provide at least one of a zirconia powder capable of producing a sintered body with high translucency even by pressureless sintering and suitable for industrial production, a method for producing the zirconia powder, a method for producing a calcined body using the zirconia powder, and a method for producing a sintered body using the zirconia powder.

DESCRIPTION OF EMBODIMENTS

A powder according to the present disclosure is described in the following embodiments.

The present embodiment provides a zirconia powder containing 2% by mole or more and 8% by mole or less of a stabilizing element and 50 ppm or less of titanium (Ti) and having an activation energy of 225 kJ/mol or more and 300 kJ/mol or less.

The present embodiment relates to a powder of zirconia. The powder of zirconia (hereinafter also referred to as the "zirconia powder") in the present embodiment is a powder containing zirconia ($ZrO_2$) as a matrix (a main component) and is not limited to a powder composed only of zirconia. Furthermore, zirconia in the zirconia powder of the present embodiment may be partially stabilized zirconia.

The powder of the present embodiment contains a stabilizing element. The stabilizing element is an element with a function of stabilizing the crystal structure of zirconia and is preferably an element that stabilizes the crystal structure of zirconia without coloring the zirconia. The stabilizing element is specifically exemplified by one or more selected from the group consisting of yttrium (Y), calcium (Ca) and magnesium (Mg), or yttrium.

The stabilizing element content is an amount at which the crystalline phase of zirconia is stabilized by a crystalline phase including a tetragonal phase, and is 2% by mole or more and 8% by mole or less. A preferred stabilizing element content (hereinafter also referred to as the "stabilizing element amount" and also referred to as the "yttrium amount" or the like when the stabilizing element is yttrium or the like) may be more than 2% by mole, 2.5% by mole or more or 3% by mole or more, may be 7% by mole or less, 6% by mole or less, 4.5% by mole or less or 4% by mole or less, and may be more than 2% by mole and 7% by mole or less, 2.5% by mole or more and 6% by mole or less, 3% by mole or more and 4.5% by mole or less or 3% by mole or more and 4% by mole or less.

The stabilizing element amount in the present embodiment is the mole fraction [% by mole] of the stabilizing element on an oxide basis with respect to the total of the stabilizing element on an oxide basis and zirconia. Furthermore, the stabilizing element amount of a powder containing titanium may be determined from the mole fraction [% by mole] of the stabilizing element on an oxide basis with respect to the total of titanium in terms of $TiO_2$, the stabilizing element on an oxide basis and zirconia. The stabilizing element on an oxide basis in the present embodiment may be $Y_2O_3$ for yttrium, CaO for calcium, and MgO for magnesium.

The powder of the present embodiment contains 50 ppm or less (50 ppm by mass or less) of titanium (Ti). It is known that 2000 ppm (0.2% by mass) or more of titanium is added to zirconia to promote grain growth of crystal grains of a sintered body. In contrast, the powder of the present embodiment contains titanium (that is, a titanium content of more than 0 ppm (more than 0 ppm by mass)) and contains titanium in an amount that does not substantially promote the grain growth of crystal grains of a sintered body. Containing such a trace amount of titanium and having activation energy described later facilitate sintering in heat treatment in a relatively high temperature range among sintering processes. Thus, it is thought that a sintered body with high translucency can be produced even by ordinary pressureless sintering. The titanium contained in the powder of the present embodiment is more preferably titanium derived from the raw material, whereby the activation energy of the powder of the present embodiment is easily obtained. The powder of the present embodiment contains titanium of the measurement limit or more (for example, more than 0 ppm, more than 5 ppm or more than 10 ppm), preferably contains titanium of 10 ppm or more or more than 20 ppm, and preferably contains titanium of 40 ppm or less or 30 ppm or less, for example, more than 0 ppm by mass and 50 ppm by mass or less, more than 5 ppm by mass and 40 ppm by mass or less or more than 10 ppm by mass and 30 ppm by mass or less.

The titanium content (hereinafter also referred to as the "titanium amount") in the present embodiment is the mass fraction [ppm] of titanium in terms of $TiO_2$ with respect to the total of titanium in terms of $TiO_2$, the stabilizing element on an oxide basis and zirconia. When the powder of the present embodiment contains alumina or the like, the titanium amount may be the mass fraction (ppm) of titanium in terms of $TiO_2$ with respect to the total of a metal element on an oxide basis, titanium in terms of $TiO_2$, the stabilizing element on an oxide basis and zirconia.

In the measurement of the titanium amount, these may be measured by ICP mass spectrometry using a typical ICP mass spectrometer (for example, apparatus name: NexION300S, manufactured by Perkin Elmer).

The powder of the present embodiment can produce a sintered body with high translucency by pressureless sintering even without alumina but may contain alumina ($Al_2O_3$). The alumina content may be 0% by mass or more or more than 0% by mass, and 0.5% by mass or less, 0.3% by mass or less or 0.25% by mass or less, less than 0.25% by mass, less than 0.1% by mass or less than 0.05% by mass, and is exemplified by 0% by mass or more and 0.5% by mass or less, 0% by mass or more and 0.25% by mass or less, 0% by mass or more and less than 0.25% by mass, 0% by mass or more and 0.1% by mass or less, more than 0% by mass and less than 0.25% by mass or more than 0% by mass and less than 0.05% by mass. From the perspective of a sintered body produced with high strength, the alumina content may be 0.1% by mass or more and 3% by mass or less or 0.1% by mass or more and 0.5% by mass or less.

The alumina content (hereinafter also referred to as the "alumina amount") in the present embodiment is the mass fraction [% by mass] of aluminum in terms of $Al_2O_3$ with respect to the total of aluminum in terms of $Al_2O_3$, a metal element on an oxide basis, the stabilizing element on an oxide basis and zirconia.

In the measurement of the stabilizing element amount and the alumina amount, aluminum may be measured by ICP emission spectrometry using a typical ICP mass spectrometer (for example, apparatus name: 7300DV, manufactured by Perkin Elmer).

The powder of the present embodiment may contain hafnia ($HfO_2$) that is an incidental impurity of zirconia. The hafnia content varies depending on the raw material ore of zirconia and the treatment method thereof. In the present embodiment, to calculate a value based on the composition, such as the density, hafnia may be regarded as zirconia.

The powder of the present embodiment may be composed of zirconia containing a stabilizing element, titanium and, if necessary, alumina, and may contain a sufficiently small amount of actinoid element. The actinoid element that may be contained in the powder of the present embodiment may be one or more selected from the group consisting of actinium (Ac), thorium (Th) and protactinium (Pa), or thorium. The actinoid element is derived from a raw material ore, such as zircon sand, and it is thought that the actinoid element remained in the powder may affect the activation energy of the powder.

When the actinoid element is contained, the content thereof (hereinafter also referred to as the "actinoid amount" and also referred to as the "thorium amount" or the like when the actinoid is thorium or the like) is exemplified by the measurement limit or more (for example, 0 ppb by mass or more, more than 0 ppb by mass, more than 100 ppb by mass, 200 ppb by mass or more or 400 ppb by mass or more) and 700 ppb by mass or less or 500 ppb by mass or less, and may be 0 ppb by mass or more and 700 ppb by mass or less, 0 ppb by mass or more and 500 ppb by mass or less, more than 0 ppb by mass and 700 ppb by mass or less or more than 0 ppb by mass and 500 ppb by mass or less.

The actinoid amount in the present embodiment is the mass fraction [ppb] of the actinoid (element) with respect to the mass of the powder.

In the measurement of the actinoid amount, the actinoid may be measured by ICP mass spectrometry using a typical ICP mass spectrometer (apparatus name: NexION300S, manufactured by Perkin Elmer).

The powder of the present embodiment may contain chlorine (Cl). The chlorine content of the powder of the present embodiment is exemplified by 0 ppm by mass or more, more than 0 ppm by mass or 100 ppm by mass or more, and 500 ppm by mass or less, 300 ppm by mass or less or 250 ppm by mass or less, and may be 0 ppm by mass or more and 500 ppm by mass or less or more than 0 ppm by mass and 300 ppm by mass or less.

The chlorine amount in the present embodiment is the mass fraction [ppm] of chlorine with respect to the mass of the powder, which is determined from fluorescent X-ray diffraction.

For example, when the powder of the present embodiment is a zirconia powder containing yttrium, thorium, titanium and alumina, the yttrium amount [% by mole] is determined from $Y_2O_3$ [mol]/($Y_2O_3 + ZrO_2$) [mol], the titanium amount [ppm] is determined from $TiO_2$ [g]/($Y_2O_3 + ZrO_2 + TiO_2 + ThO_2 + Al_2O_3$) [g], and the alumina amount [ppm] is determined from $Al_2O_3$ [g]/($Y_2O_3 + ZrO_2 + TiO_2 + ThO_2 + Al_2O_3$) [g].

The actinoid amount of the powder is determined from the mass of actinoid (element)/the mass of the powder [ppb]. Likewise, a non-metal element chlorine in the powder is determined from the mass of chlorine (Cl)/the mass of the powder [ppm]. The mass of the powder in the calculation of the actinoid amount and the chlorine amount is the Ig. Loss mass and is the mass of the powder after treatment in an air atmosphere at 1000°C for 1 to 2 hours (preferably 2 hours).

The powder of the present embodiment is a zirconia powder with an activation energy of 225 kJ/mol or more and 300 kJ/mol or less. Containing a stabilizing element and a trace amount of titanium, preferably titanium derived from a raw material, and having such an activation energy promote sintering in a high-temperature region. This tends to promote densification before the increase of the crystal grain size. The activation energy is preferably 225 kJ/mol or more, 240 kJ/mol or more or 260 kJ/mol or more, and 300 kJ/mol or less, 290 kJ/mol or less or 270 kJ/mol or less. The activation energy is, for example, 225 kJ/mol or more and 300 kJ/mol or less, 240 kJ/mol or more and 290 kJ/mol or less, 260 kJ/mol or more and 290 kJ/mol or less or 260 kJ/mol or more and 270 kJ/mol or less.

In the present embodiment, the activation energy is determined by heating a molded powder as a measurement sample and measuring the length of the measurement sample (hereinafter also referred to as the "sample length") from an Arrhenius plot.

The sample length is measured under the following conditions.

Measurement sample: rectangular parallelepiped green body 4 mm in height × 4 mm in width × 5 mm in length

Heating/cooling atmosphere: air atmosphere
Heating rate: 5°C/min
Maximum attained temperature: approximately 1500°C
Measurement interval of sample length: $\Delta T = 5°C$
Cooling rate: 5°C/min

The temperature of the measurement sample may be increased and decreased using a typical thermal dilatometer (for example, TD5020SE, manufactured by NETZSCH).

The measurement sample may be prepared by weighing $1.25 \pm 0.01$ g of the powder of the present embodiment, uniaxially pressing the powder at a forming pressure of 20 MPa, subjecting the powder to cold isostatic pressing (hereinafter also referred to as "CIP treatment") at 200 MPa to form a rectangular parallelepiped green body 4 mm in height × 4 mm in width × 5 mm in length, and firing the green body in an air atmosphere at 500°C for 1 hour.

The measured value ($L_T'$) of the sample length during the temperature rise is a value including the influence of thermal expansion. Thus, the sample length ($L_T$) used for calculation of the activation energy is a value corrected by removing the influence of thermal expansion from the measured value ($L_T'$). The corrected value is obtained by correcting the measured value using the thermal expansion coefficient, and the correction using the thermal expansion coefficient can be performed by a known method suitable for the thermal dilatometer to be used, such as a method using a standard sample.

In the range where the amount of change ($\Delta L$) of the sample length after the correction ($L_T$) with respect to the sample length before the temperature rise (La) is 0% or more and 4% or less, the temperature T and the sample length after the correction at the temperature T ($L_T$) may be Arrhenius plotted in the form of $\ln [T^{3/5} \times \Delta(1 - L_T/L_0)/\Delta T]$ to determine the activation energy from the slope of a linear approximation formula obtained from the plot.

The Arrhenius plot corresponds to the left side of the following formula, and the activation energy can be determined by analyzing the plot utilizing the formula on the right side. More specifically, the slope of the linear approximation formula determined from the plot corresponds to Q/RT of the following formula, and Q may be determined from Q/RT.

[Math. 1]

$$\ln \left[ T^{3/5} \cdot \frac{\Delta(1 - L_T/L_0)}{\Delta T} \right] = \ln\beta - \frac{Q}{RT}$$

In the above formula, $\beta$ denotes a frequency factor, Q denotes an activation energy [kJ/mol], R denotes a gas constant (= 8.31 [J/(mol·K)]), T denotes a temperature [K], $L_0$ denotes a sample length [mm] before temperature rise, $L_T$ denotes a sample length [mm] after correction at the temperature T, and $\Delta T$ is 5 [K].

The powder of the present embodiment may have a BET specific surface area of 6 m²/g or more or 7 m²/g or more, and 15 m²/g or less, 12 m²/g or less or 10 m²/g or less, or 6 m²/g or more and 15 m²/g or less, 7 m²/g or more and 12 m²/g or less or 7 m²/g or more and 10 m²/g or less.

In the present embodiment, the BET specific surface area is a value measured by a quantitative method according to JIS R 1626 and may be measured by a five-point method using a typical specific surface area automatic measuring apparatus (for example, Tristar 3000 manufactured by Micromeritics) and nitrogen as an adsorption gas. Degassing treatment may be performed in an air atmosphere at 550°C for 30 minutes as pretreatment before the measurement.

The powder of the present embodiment may have a primary particle size of 80 nm or more or 100 nm or more, and 150 nm or less, 135 nm or less, 125 nm or less or 120 nm or less, or 80 nm or more and 150 nm or less, 80 nm or more and 135 nm or less, 100 nm or more and 135 nm or less, 100 nm or more and 125 nm or less or 100 nm or more and 120 nm or less.

The average primary particle size in the present embodiment is an average value of primary particle sizes (so-called TEM sizes) determined with a transmission electron microscope. 300 particles are extracted from an image observed with a transmission electron microscope, and the equivalent circular size of each extracted particle is determined using image analysis software (for example, ImageJ). The average primary particle size is the average value of the equivalent circular sizes.

The powder of the present embodiment is preferably less aggregated and preferably has an average secondary particle size of 0.7 $\mu$m or less, 0.5 $\mu$m or less or 0.45 $\mu$m or less. The average secondary particle size may be equal to or larger than the average primary particle size and may be, for example, 0.15 $\mu$m or more, 0.2 $\mu$m or more or 0.3 $\mu$m or more. A preferred range of the average secondary particle size may be 0.15 $\mu$m or more and 0.7 $\mu$m or less, 0.2 $\mu$m or more and 0.5 $\mu$m or less or 0.3 $\mu$m or more and 0.45 $\mu$m or less.

The average secondary particle size in the present embodiment is a median size (D50) in a volumetric particle size distribution of a powder measured by a wet method and can be measured with a typical apparatus (for example, MT3300EXII manufactured by MicrotracBEL Corp.). The measurement sample may be a slurry of a powder produced by heat treatment in an air atmosphere at 400°C to 600°C and then removal of slow aggregation by dispersion treatment, such as ultrasonication.

The monoclinic fraction of the powder of the present embodiment may be 0% or more or 3% or more, and 10% or less, 6% or less or 5% or less, or 0% or more and 10% or less or 3% or more and 5% or less.

In the present embodiment, the monoclinic fraction is the ratio of monoclinic zirconia in the zirconia crystalline phase. A powder X-ray diffraction (hereinafter also referred to as "XRD") pattern of the powder can be used to determine the monoclinic fraction using the following formula.

$$f_m = \{I_m(111) + I_m(11\text{-}1)\}/[I_m(111) + I_m(11\text{-}1) + I_t(111) + I_c(111)] \times 100$$

In the above formula, $f_m$ denotes the monoclinic fraction (%), $I_m(111)$ and $I_m(11\text{-}1)$ denote the integrated intensities of XRD peaks corresponding to the (111) plane and the (11-1) plane of monoclinic zirconia, respectively, $I_t(111)$ denotes the integrated intensity of an XRD peak corresponding to the (111) plane of tetragonal zirconia, and $I_c(111)$ denotes the integrated intensity of an XRD peak corresponding to the (111) plane of cubic zirconia.

Radiation source: CuK$\alpha$ radiation ($\lambda$ = 0.15418 nm)
Measurement mode: continuous scanning
Scanning speed: 4 degrees/min
Step width: 0.02 degrees
Measurement range: 2$\theta$ = 26 to 33 degrees
XRD patterns can be measured under the following conditions.

In the XRD pattern measurement, an XRD peak corresponding to each crystal plane of zirconia is preferably measured as a peak with a peak top at the following 2$\theta$.

XRD peak corresponding to (111) plane of monoclinic zirconia: 2$\theta$ = 31 $\pm$ 0.5 degrees
XRD peak corresponding to (11-1) plane of monoclinic zirconia: 2$\theta$ = 28 $\pm$ 0.5 degrees
RD peaks corresponding to the (111) plane of tetragonal zirconia and cubic zirconia overlap, and the 2$\theta$ of each peak top is 2$\theta$ = 30 $\pm$ 0.5 degrees.

The integrated intensity of an XRD peak of each crystal plane can be determined after the XRD peaks are separated by a method described in H. Toraya, J. Appl. Crystallogr., 19, 440-447 (1986) using "PRO-FIT" as a calculation program.

The powder of the present embodiment can be used in a method for producing at least one of a calcined body and a sintered body and can be used as a precursor of a calcined body and a sintered body.

The method for producing a calcined body using the powder of the present embodiment may be any method that includes a step of calcining a green body (hereinafter also referred to as the "calcination step").

The green body is a green compact of the powder of the present embodiment and is produced by compacting the powder of the present embodiment by a known method. The compacting method is, for example, at least one selected from the group consisting of uniaxial pressing, CIP treatment, slip casting and injection molding, preferably at least one selected from the group consisting of uniaxial pressing, CIP treatment and injection molding.

The calcination may be performed by heat-treating a green body (green compact) at a temperature lower than the sintering temperature, and the calcination conditions include the following conditions.

Calcination atmosphere: air atmosphere
Calcination temperature: 800°C or more and less than 1200°C

The method for producing a sintered body using the powder of the present embodiment may be any method that includes a step of sintering at least one of a green body and a calcined body containing the powder of the present embodiment (hereinafter also referred to as the "sintering step").

The sintering may be a known sintering method, for example, one or more selected from the group consisting of pressure sintering, vacuum sintering and pressureless sintering, preferably pressureless sintering and pressure sintering, more preferably pressureless sintering. Preferred sintering conditions include the following conditions.

Sintering method: pressureless sintering
Sintering atmosphere: air atmosphere
Sintering temperature: 1200°C or more or 1350°C or more and 1600°C or less or 1550°C or less

In the present embodiment, "pressureless sintering" is a method for sintering an object to be sintered (a green body, a calcined body or the like) by heating without applying an external force to the object during sintering.

A sintered body produced from the powder of the present embodiment is preferably a sintered body produced by pressureless sintering, that is, a so-called pressureless sintered body.

A sintered body produced from the powder of the present embodiment preferably has a total light transmittance (hereinafter also referred to simply as the "total light transmittance") of 38.5% or more, more preferably 40% or more, as measured in accordance with JIS K 7361-1 at a sample thickness of 1 mm. The translucency increases with the total light transmittance. The total light transmittance is, for example, 50% or less or 46% or less. The range of the total light transmittance may be 38.5% or more and 50% or less, 40% or more and 50% or less or 40% or more and 46% or less.

In the present embodiment, the total light transmittance can be measure by a method according to JIS K 7361-1. The total light transmittance may be measured using, as a measurement sample, a disk-shaped sintered body with a sample thickness of 1mm and a surface roughness Ra of 0.02 $\mu$m or less on both surfaces and using, as a measuring apparatus, a haze meter equipped with a D65 light source (for example, haze meter NDH4000 manufactured by Nippon Denshoku Industries Co., Ltd.).

A calcined body or a sintered body produced from the powder of the present embodiment can be used in an application of a known zirconia sintered body as a member containing the calcined body or the sintered body. For example, a calcined body can be used as a biomaterial, such as a dental material, and a sintered body can be used as a structural material, such as a member for a grinder, a precision machine component or an optical connector component, a biomaterial, such as a dental material, or an external material, such as a decorative member or an exterior component of an electronic device.

Next, a method for producing the powder of the present embodiment is described.

The powder of the present embodiment can be produced by a production method including the steps of: adjusting a pH of a raw material solution containing a zirconium source and a stabilizing element source to 3.5 or more and 5.5 or less; heating the raw material solution to produce a zirconia sol solution; mixing the zirconia solution and an alkaline solution to produce a coprecipitate; and heat-treating the coprecipitate.

The method for producing the powder of the present embodiment includes a step of adjusting the pH of a raw material solution containing a zirconium source and a stabilizing element source to 3.5 or more and 5.5 or less (hereinafter also referred to as the "precipitation step"). In the method for producing the powder of the present embodiment, a zirconium sol is produced by so-called hydrothermal synthesis. In the precipitation step, the pH of the raw material solution can be adjusted before the hydrothermal synthesis to selectively precipitate a trace amount of metal element coexisting in the zirconium source and to prevent precipitation of an excessively contained metal element derived from the starting material. Thus, in the subsequent step of heating the raw material solution to produce a zirconia sol solution, a zirconium sol containing a metal element, such as titanium, that can contribute to the characteristic improvement of zirconia can be produced.

The zirconium source used in the precipitation step may be any salt containing zirconium (zirconium salt). The zirconium salt may be an industrially used zirconium salt and is preferably a zirconium salt produced from a natural ore, more preferably a zirconium salt produced from zircon sand. Such a zirconium salt contains a sufficient amount of titanium, optionally, titanium and an actinoid element. Although a high-purity zirconium salt, such as a reagent, can also be used as a zirconium source, it is not necessary to use such a zirconium salt with an excessively high purity from the perspective of production costs.

The zirconium salt may specifically be one or more selected from the group consisting of zirconium nitrate, zirconium sulfate and zirconium oxychloride, preferably zirconium oxychloride, more preferably zirconium oxychloride produced from zircon sand.

The stabilizing element source is a compound or a salt containing a stabilizing element and may be one or more selected from the group consisting of an oxide, a hydroxide, an oxyhydroxide, a halide, a sulfate, a nitrate and an acetate containing a stabilizing element, one or more selected from the group consisting of an oxide, a hydroxide and a chloride containing a stabilizing element or a chloride containing a stabilizing element. When the stabilizing element is yttrium, the stabilizing element source (hereinafter also referred to as the "yttrium source" or the like when the stabilizing element is yttrium or the like) is preferably at least one of yttrium oxide (yttria) and yttrium chloride.

A raw material solution containing a zirconium source and a stabilizing element source preferably contains ammonium chloride because primary particles of the resulting powder are less likely to aggregate.

The solvent of the raw material solution may be any solvent, for example, at least one of water and an alcohol, or water.

The concentration of zirconium in the raw material solution may be 0.05 mol/L or more or 0.1 mol/L or more, and 1 mol/L or less or 0.5 mol/L or less, or 0.05 mol/L or more and 1 mol/L or less or 0.1 mol/L or more and 0.5 mol/L or less. The concentration of the stabilizing element in the raw material solution may be an amount that provides the desired stabilizing content of the powder and is, for example, 0.003 mol/L or more or 0.005 mol/L or more, and 0.02 mol/L or less or 0.05 mol/L or less, or 0.003 mol/L or more and 0.02 mol/L or less or 0.005 mol/L or more and 0.05 mol/L or less.

In the precipitation step, the raw material solution has a pH of 3.5 or more and 5.5 or less, preferably 4 or more and 5 or less. The raw material solution with a pH in this range is preferably mixed with an alkaline solution by any method, for example, by a method of adding the alkaline solution to the raw material solution or a method of adding the raw material solution to the alkaline solution. A specific method may be a method of adding an alkaline solution to a mixed solution such that the pH is $4 \pm 0.5$, preferably $4.5 \pm 0.5$.

The alkaline solution used in the precipitation step is preferably an alkaline solution containing no metal cation and may be aqueous ammonia.

The method for producing the powder of the present embodiment includes the step of heating the raw material solution to produce a zirconia sol solution (hereinafter also referred to as the "sol step"). Thus, the zirconia sol is produced. The heating conditions for the raw material solution may be appropriately determined in accordance with the amount of the raw material solution to be used, the type and characteristics of the heating device, and the like and are, for example, the following conditions.

Heating temperature: 120°C or more and 250°C or less
Heating time: 30 minutes or more and 100 hours or less
Heating state: stirring state or static state, preferably stirring state

The method for producing the powder of the present embodiment includes the step of mixing the zirconia sol solution and an alkaline solution to produce a coprecipitate (hereinafter also referred to as the "coprecipitation step"). In the coprecipitation step, a zirconia sol containing the stabilizing element uniformly dispersed is precipitated as a coprecipitate.

The alkaline solution to be subjected to the coprecipitation step (hereinafter also referred to as the "coprecipitation alkaline solution") may be the same as or different from the alkaline solution used in the precipitation step (hereinafter also referred to as the "precipitation alkaline solution") and is preferably aqueous ammonia.

The method for mixing the zirconia sol solution and the coprecipitation alkaline solution may be any method for producing the coprecipitate in a practical yield, for example, a method of adding the coprecipitation alkaline solution to the zirconia sol solution or a method of adding the zirconia sol solution to the coprecipitation alkaline solution. The zirconia sol solution tends to have a lower pH than the raw material solution in the precipitation step, and the coprecipitation alkaline solution is therefore added to increase the pH and produce the coprecipitate. To more efficiently produce the coprecipitate, the mixing method is preferably a method of adding the coprecipitation alkaline solution to the zirconia sol solution such that the zirconia sol solution has a pH of 5 or more and 6.5 or less or 5 or more and 6 or less. A specific method may be a method of adding the coprecipitation alkaline solution to the zirconia sol solution such that the pH is 5 ± 0.5, preferably 5.5 ± 0.5.

In the method for producing the powder of the present embodiment, at least one of the zirconium source, the stabilizing element source, the precipitation alkaline solution and the coprecipitation alkaline solution preferably contains a chloride salt.

The method for producing the powder of the present embodiment includes a step of collecting the coprecipitate (hereinafter also referred to as the "collecting step"). In the collecting step, the coprecipitate collected may be washed and dried. The collecting, washing, and drying methods may be any methods that can be applied to a method for producing a zirconia powder. For example, the method for collecting the coprecipitate is exemplified by at least one of filtration, ultrafiltration, filter press, centrifugation and sedimentation, or at least one of ultrafiltration and filter press. The method for washing the coprecipitate is, for example, to pass a sufficient amount of pure water through the coprecipitate. The drying method may be performed under any conditions for removing water physically adsorbed on the coprecipitate, and the drying may be performed in an air atmosphere at 100°C to 200°C.

The method for producing the powder of the present embodiment includes the step of heat-treating the coprecipitate (hereinafter also referred to as the "heat-treatment step"). In the heat-treatment step, the powder of the present embodiment is produced. The heat-treatment conditions are exemplified by the following conditions and may be appropriately determined in accordance with the treatment amount of the coprecipitate to be subjected to the heat treatment and the characteristics of a heat treatment furnace.

Heat treatment atmosphere: air atmosphere
Heat-treatment temperature: 800°C or more or 900°C or more and 1100°C or less or 1050°C or less
Heat-treatment time: 30 minutes or more or 1 hour or more and 24 hours or less or 12 hours or less

The method for producing the powder of the present embodiment may include a step of grinding the powder after the heat treatment (hereinafter also referred to as the "grinding step"). This can adjust the average particle size and the BET specific surface area of the powder. The grinding method may be at least one of wet grinding and dry grinding, preferably wet grinding, more preferably grinding with at least one of a ball mill and a vibrating mill. For wet grinding, the powder content of a slurry containing the powder (hereinafter also referred to as the "solid concentration") is, for example, 40% by mass or more and 60% by mass or less.

For the powder of the present embodiment containing alumina, the zirconia powder and an alumina source are preferably mixed in the grinding step.

The alumina source is at least one of an alumina powder and alumina sol, preferably an alumina powder, more preferably an α-alumina powder. The alumina source may be added in an amount equivalent to the desired amount of alumina in the zirconia powder.

To improve operability (handleability), the method for producing the powder of the present embodiment may include a step of granulating the powder (hereinafter also referred to as the "granulation step"). A known method can be used as a granulation method. The granulation method may include making the powder into a slurry and spray-drying the slurry. For example, in wet grinding in the grinding step, the slurry in the grinding place may be spray-dried as it is or if necessary after the powder content (solid concentration) of the slurry is adjusted. An organic binder may be used to adjust the viscosity of the slurry to be granulated. The organic binder may be appropriately selected in accordance with the viscosity of the slurry and a spray dryer to be used so as to achieve a desired yield and is, for example, an acrylic binder. The organic binder content may be appropriately changed with the viscosity of the slurry and is, for example, 0.1% by mass or more and 5% by mass or less of the mass of the slurry.

EXAMPLES

The present embodiment is more specifically described in the following examples. However, the present embodiment is not limited to these examples.

(Activation Energy)

1.25 ± 0.01 g of the powder was weighed, was uniaxially pressed at a forming pressure of 20 MPa, and was subjected to CIP treatment at 200 MPa to form a rectangular parallelepiped green body 4 mm in height × 4 mm in width × 5 mm in length. The green body was fired in an air atmosphere at 500°C for 1 hour to produce a measurement sample.

After the length (La) [μm] of the measurement sample before temperature rise was measured with a micrometer, the measurement sample was heated and cooled under the following conditions using a thermal dilatometer (apparatus name: TD5020SE, manufactured by NETZSCH).

Heating/cooling atmosphere: air atmosphere

Heating rate: 5°C/min
Maximum attained temperature: approximately 1500°C
Measurement interval of sample length: $\Delta T = 5°C$
Cooling rate: 5°C/min

In the range where the amount of change ($\Delta L/L_0$) of the sample length after correction ($L_T$) with respect to the sample length before temperature rise (La) is 0% or more and 4% or less, the temperature T and the sample length after correction at the temperature T ($L_T$) were Arrhenius plotted in the form of In [$T^{3/5} \times \Delta(1 - L_T/L_0)/\Delta T$]. On the basis of the above formula, the activation energy (Q [kJ/mol]) was determined from the slope of a linear approximation formula obtained from the plot. The measured value ($L_T'$) of the sample length was corrected using a thermal expansion coefficient ($9.3 \times 10^{-6}$ [/°C]) determined from the relationship between the temperature and the sample length at intervals of $\Delta T = 5°C$ during the temperature decrease.

(BET Specific Surface Area)

The BET specific surface area of the powder sample was measured with a typical specific surface area automatic measuring apparatus (apparatus name: Tristar 3000, manufactured by Micromeritics) using nitrogen gas as an adsorption gas. The powder sample was degassed in an air atmosphere at 550°C for 30 minutes as pretreatment before the measurement.

(Monoclinic Fraction)

An XRD pattern of a powder sample was measured with a typical X-ray diffractometer (apparatus name: MiniFlex600, manufactured by Rigaku Corporation). The conditions for XRD measurement are as follows:

Radiation source: CuK$\alpha$ radiation ($\lambda$ = 0.15418 nm)
Measurement mode: continuous scanning
Scanning speed: 1 degree/min
Step width: 0.02 degrees
Measurement range: $2\theta$ = 26 to 33 degrees

The monoclinic fraction $f_m$ was determined using the above formula.

(Average Primary Particle Size)

300 particles were extracted from a TEM image observed with a transmission electron microscope. The extracted particles were analyzed using image analysis software (software name: ImageJ) to determine the equivalent circular size of each particle. The average primary particle size is the average value of the equivalent circular sizes.

(Average Secondary Particle Size)

The median size (D50) was determined as an average secondary particle size by measuring a volumetric particle size distribution curve of the powder using a Microtrac particle size distribution analyzer (apparatus name: MT3300EXII, manufactured by MicrotracBEL Corp.) in an HRA mode. Before the measurement, the powder was heat-treated in an air atmosphere at 550°C, was then suspended in pure water, and was dispersed for 10 minutes using an ultrasonic homogenizer to remove slow aggregation.

(Chlorine Amount)

The chlorine amount of the powder was determined by a calibration curve method using a scanning X-ray fluorescence spectrometer (apparatus name: ZSX Primus IV, manufactured by Rigaku Corporation).

(Total Light Transmittance)

The total light transmittance was measured by a method according to JIS K 7361-1 using a haze meter (apparatus name: NDH4000, manufactured by Nippon Denshoku Industries Co., Ltd.) and a D65 light source.
A measurement sample was a disk-shaped sintered body with a thickness of 1 mm, both surfaces of which were polished to a surface roughness Ra of 0.02 $\mu$m or less.

(Bending Strength)

The bending strength was measured in a three-point bending test according to JIS R 1601. The measurement was performed at a span of 30 mm using a columnar sintered body sample with a width of 4 mm and a thickness of 3 mm. The bending strength was determined by averaging 10 measurements.

(Degradation Test)

A degradation test was performed by immersing a sintered body sample in hot water at 140°C for 24 hours. The sintered body sample after the degradation test was cut to observe a cross section by SEM. A structure with a large number of cracks on the surface of the sintered body observed by SEM was regarded as a degraded layer, and the thickness of the degraded layer was measured.

<Preparation of Powder>

Example 1

Zircon sand was melted with aqueous sodium hydroxide and was then decomposed with hydrochloric acid to produce a zirconium oxychloride solution. Ammonium chloride, yttrium chloride, pure water and the zirconium oxychloride were mixed to produce an aqueous raw material solution with a zirconium oxychloride concentration of 0.3 mol/L, an ammonium chloride concentration of 0.5 mol/L and an yttrium chloride concentration of 0.0064 mol/L. While the pH of the aqueous raw material solution was adjusted to $4.5 \pm 0.5$, aqueous ammonia ($NH_4OH$) with an ammonia concentration of 0.1 mol/L was added dropwise to the aqueous raw material solution with stirring. The aqueous raw material solution after the dropwise addition of the aqueous ammonia was heated at 130°C for 50 hours to form a zirconia sol and produce a zirconia sol solution. Aqueous ammonia with an ammonia concentration of 0.1 mol/L was added to the zirconia sol solution to produce a coprecipitate. The aqueous ammonia was added while stirring the reaction liquid and appropriately adjusting the addition rate so that the reaction liquid had a pH in the range of 5 to 6. The coprecipitate was filtered, washed with water and dried to produce a dry powder. The dry powder was then heat-treated in an air atmosphere at 1010°C for 2 hours.
The powder after the heat treatment was mixed with pure water to produce a slurry with a solid concentration of 50% by mass, and the slurry was treated with a ball mill for 8 hours. Zirconia balls with a diameter of 10 mm were used as grinding media of the ball mill. An acrylic binder was mixed in an amount of 3.5% by mass of the mass of the treated slurry, and the mixed slurry was spray-dried to produce a granular powder, which was used as a powder of the present example.
The powder of the present example had a BET specific surface area of 11.2 $m^2$/g, an average primary particle size of 115 nm, an average secondary particle size of 0.44 $\mu$m and a monoclinic fraction of 6%.

Example 2

A powder and a sintered body of the present example were produced in the same manner as in Example 1 except that the concentration of yttrium chloride in the aqueous raw material solution was changed to 0.0114 mol/L and the calcination heat-treatment temperature was changed to 1050°C.
The powder of the present example had a BET specific surface area of 9.2 $m^2$/g, an average primary particle size of 116 nm, an average secondary particle size of 0.44 $\mu$m and a monoclinic fraction of 0%.

Example 3

A powder (powder 1) produced by heat treatment in the same manner as in Example 1 except that the calcination temperature was 1050°C and a powder (powder 2) produced by heat treatment in the same manner as in Example 3 were mixed at a ratio of calcined powder 1:calcined powder 2 of 49:51 (mass ratio) to produce a mixed powder. A powder of the present example was produced in the same manner as in Example 1 except that the mixed powder was used.
The powder of the present example had a BET specific surface area of 9.8 $m^2$/g, an average primary particle size of 123 nm, an average secondary particle size of 0.44 $\mu$m and a monoclinic fraction of 3%.

Example 4

A powder of the present example was produced in the same manner as in Example 1 except that the heat-treatment temperature was changed to 1100°C, the powder after the heat treatment, 0.24% by mass of an alumina powder and pure water were mixed, and a slurry with a solid concentration of 50% by mass was treated with a ball mill.

The powder of the present example had a BET specific surface area of 8.1 $m^2$/g, an average primary particle size of 130 nm, an average secondary particle size of 0.47 $\mu$m and a monoclinic fraction of 7%.

Comparative Example 1

A commercially available zirconia powder containing 3% by mole of yttrium (product name: TZ-3YSB-E, manufactured by Tosoh Corporation) was used as a powder of the present comparative example.

Comparative Example 2

A commercially available zirconia powder containing 3% by mole of yttrium (product name: TZ-3YS, manufactured by Tosoh Corporation) was mixed with titania ($TiO_2$) at a titanium content of 45 ppm.

The following table shows the results for these examples and comparative examples.

[Table 1]

| | $Y_2O_3$ [mol%] | $Al_2O_3$ [% by weight] | Ti [ppm] | Cl [ppm] | Th [ppb] | Activation energy [kJ/mol] |
|---|---|---|---|---|---|---|
| Example 1 | 3.1 | 0 | 29 | 200 | 550 | 280 |
| Example 2 | 5.4 | 0 | 27 | 200 | 480 | 264 |
| Example 3 | 4.3 | 0 | 27 | 200 | 510 | 265 |
| Example 4 | 3.1 | 0.24 | 24 | 200 | 410 | 251 |
| Comparative Example 1 | 2.9 | 0.25 | <10 | <200 | <100 | 285 |
| Comparative Example 2 | 2.9 | 0 | 45 | <200 | <100 | 219 |

Examples 5 to 8

A powder of Example 5 was produced in the same manner as in Example 1 except that the acrylic binder was not used for the spray drying. The powder of the present example had an activation energy of 280 kJ/mol, a BET specific surface area of 11.2 $m^2$/g, an average primary particle size of 115 nm, an average secondary particle size of 0.44 $\mu$m and a monoclinic fraction of 6%, and it was confirmed that the binder did not affect the composition and these physical properties.

Powders of Examples 6, 7 and 8 were produced in the same manner as in Examples 2, 3 and 4, respectively, except that the acrylic binder was not used for the spray drying. The results are shown in the following table.

[Table 2]

| | $Y_2O_3$ [mol%] | $Al_2O_3$ [% by weight] | Ti [ppm] | Cl [ppm] | Th [ppb] | Activation energy [kJ/mol] |
|---|---|---|---|---|---|---|
| Example 5 | 3.1 | 0 | 29 | 200 | 550 | 280 |
| Example 6 | 5.4 | 0 | 27 | 200 | 480 | 264 |
| Example 7 | 4.3 | 0 | 27 | 200 | 510 | 265 |
| Example 8 | 3.1 | 0.24 | 24 | 200 | 410 | 251 |

The table shows that the binder does not affect the composition, the activation energy, the BET specific surface area, the average primary particle size, the average secondary particle size and the monoclinic fraction.

<Preparation of Calcined Body and Sintered Body>

Examples 9 to 13 and Comparative Examples 3 and 4

Each of the powders produced in Examples 1 to 4 and 8 and Comparative Examples was molded by metal mold pressing at a forming pressure of 20 MPa and then by isostatic pressing at a forming pressure of 200 MPa to produce a green body. The green body was heated at a rate of 50°C/hour and was calcined at 1000°C for 2 hours to produce a calcined body. The calcined body was then heated at a rate of 600°C/hour and was fired at the following sintering temperature for 2 hours to produce a sintered body.

[Table 3]

| Example No. | Powder | Sintering temperature (°C) | Sintered body | | |
|---|---|---|---|---|---|
| | | | Total light transmittance (%) | Bending strength (MPa) | Thickness of degraded layer ($\mu$m) |
| Example 9 | Example 1 | 1450 | 39 | 997 | 17 |
| Example 10 | Example 2 | 1450 | 48 | 634 | 0 |
| Example 11 | Example 3 | 1500 | 45 | 1006 | 3 |
| Example 12 | Example 4 | 1450 | 39 | 1259 | 1 |
| Example 13 | Example 8 | 1450 | 40 | 1296 | 1 |
| Com parative Example 3 | Com parative Example 1 | 1450 | 35 | 1208 | 5 |
| Com parative Example 4 | Com parative Example 2 | 1450 | 29 | 1180 | 16 |

All the sintered bodies of the examples had a high total light transmittance of more than 35%, and the sintered bodies of Examples 9 to 11 containing no alumina had a total light transmittance of 39% or more. Examples 12 and 13 show that the presence or absence of the binder had little influence on the total light transmittance, the bending strength and the thickness of the degraded layer.

The entire contents of the description, claims and abstract of Japanese Patent Application No. 2021-192672 filed on November 29, 2021 are hereby incorporated by reference as the disclosure of the description of the present disclosure.

**Claims**

1.  A zirconia powder comprising 2% by mole or more and 8% by mole or less of a stabilizing element and 50 ppm or less of titanium (Ti) and having an activation energy of 225 kJ/mol or more and 300 kJ/mol or less.

2.  The powder according to claim 1, wherein the stabilizing element is one or more selected from the group consisting of yttrium, calcium and magnesium.

3.  The powder according to claim 1 or 2, comprising chlorine.

4.  The powder according to claim 3, wherein a chlorine content is 100 ppm or more and 500 ppm or less.

5.  The powder according to any one of claims 1 to 4, wherein a BET specific surface area is 6 m$^2$/g or more and 15 m$^2$/g or less.

6.  The powder according to any one of claims 1 to 5, wherein a primary particle size is 80 nm or more and 150 nm or less.

7.  The powder according to any one of claims 1 to 6, comprising an actinoid element.

8.  A method for producing the zirconia powder according to any one of claims 1 to 7, comprising the steps of: adjusting a pH of a raw material solution containing a zirconium source and a stabilizing element source to 3.5 or more and 5.5 or less; heating the raw material solution to produce a zirconia sol solution; mixing the zirconia solution and an alkaline solution to produce a coprecipitate; and heat-treating the coprecipitate.

9.  The production method according to claim 8, wherein the raw material solution contains ammonium chloride.

10. A method for producing a calcined body using the powder according to any one of claims 1 to 7.

11. A method for producing a sintered body using the powder according to any one of claims 1 to 7.

| INTERNATIONAL SEARCH REPORT | International application No. |
|---|---|
| | **PCT/JP2022/043393** |

**A. CLASSIFICATION OF SUBJECT MATTER**

*C01G 25/02*(2006.01)i; *C04B 35/486*(2006.01)i
FI:   C01G25/02; C04B35/486

According to International Patent Classification (IPC) or to both national classification and IPC

**B. FIELDS SEARCHED**

Minimum documentation searched (classification system followed by classification symbols)

C01G25/02; C04B35/486

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN); JSTPlus/JMEDPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | WANG, Cheng-li et al. Journal of Sol-Gel Science and Technology. 2014, vol. 70, no. 3, pp. 428-440, DOI:10.1007/s10971-014-3303-y <br> abstract, "1 Introduction", "2.1 Sample preparation", "3.3 Crystallization kinetic of the 4Y-PSZ precursor powders using a non-isothermal method" | 1-4, 7, 10-11 |
| X | 藤崎 浩之 et al. Tosoh Research & Technology Review. 2012, vol. 56, pp. 57-61, (FUJISAKI, Hiroyuki et al.) <br> table 1 | 1-3, 5-7, 10-11 |
| A | JP 10-510507 A (ATOMIC ENERGY CORPORATION OF SOUTH AFRICA LTD.) 13 October 1998 (1998-10-13) <br> page 5, lines 5-7 | 1, 7 |
| A | ZHANG, Jianxing et al. RSC Advances. 2017, vol. 7, pp. 39153-39159, DOI:10.1039/c7ra06710k <br> abstract, "2.1 Preparation" | 1-11 |
| A | JP 2021-59463 A (TOSOH CORP.) 15 April 2021 (2021-04-15) <br> paragraphs [0025]-[0057], examples | 1-11 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 February 2023** | **14 February 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT

International application No.

**PCT/JP2022/043393**

### C.    DOCUMENTS CONSIDERED TO BE RELEVANT

| Category* | Citation of document, with indication, where appropriate, of the relevant passages | Relevant to claim No. |
|---|---|---|
| A | US 2019/0231650 A1 (SHANDONG SINOCERA FUNCTIONAL MATERIAL CO., LTD.) 01 August 2019 (2019-08-01)<br>    paragraphs [0005]-[0023], examples | 1-11 |
| A | CN 110841623 A (SHANDONG SINOCERA FUNCTIONAL MATERIAL CO., LTD.) 28 February 2020 (2020-02-28)<br>    claims, examples | 1-11 |

Form PCT/ISA/210 (second sheet) (January 2015)

**INTERNATIONAL SEARCH REPORT**
Information on patent family members

International application No.

**PCT/JP2022/043393**

| Patent document cited in search report | | | Publication date (day/month/year) | Patent family member(s) | | | Publication date (day/month/year) |
|---|---|---|---|---|---|---|---|
| JP | 10-510507 | A | 13 October 1998 | WO | 1996/016903 | A1 | |
| | | | | page 2, lines 22-25 | | | |
| | | | | AT | 178289 | T | |
| | | | | AU | 4371696 | A | |
| | | | | CA | 2206689 | A1 | |
| | | | | CN | 1168658 | A | |
| | | | | DE | 69508789 | T2 | |
| | | | | EP | 0796226 | B1 | |
| | | | | ES | 2130694 | T3 | |
| | | | | GR | 3030180 | T3 | |
| | | | | US | 5958355 | A | |
| JP | 2021-59463 | A | 15 April 2021 | (Family: none) | | | |
| US | 2019/0231650 | A1 | 01 August 2019 | CN | 106396676 | A | |
| | | | | WO | 2018/040834 | A1 | |
| CN | 110841623 | A | 28 February 2020 | (Family: none) | | | |

Form PCT/ISA/210 (patent family annex) (January 2015)

**REFERENCES CITED IN THE DESCRIPTION**

**Patent documents cited in the description**

- WO 2008013099 A
- JP 2010150064 A
- JP 2016060687 A
- JP 2021192672 A

**Non-patent literature cited in the description**

- **H. TORAYA.** *J. Appl. Crystallogr.,* 1986, vol. 19, 440-447